**Europäisches Patentamt**

**European Patent Office**

**Office européen des brevets**

(11) Numéro de publication : **0 500 402 A1**

## (12) DEMANDE DE BREVET EUROPEEN

(21) Numéro de dépôt : **92400081.3**

(22) Date de dépôt : **13.01.92**

(51) Int. Cl.⁵ : **C04B 28/02,** C04B 18/14, E21B 33/13, B28C 5/00

(30) Priorité : **21.02.91 FR 9102077**

(43) Date de publication de la demande : **26.08.92 Bulletin 92/35**

(84) Etats contractants désignés : **DE DK ES GB IT NL SE**

(71) Demandeur : **TOTAL Société anonyme dite : Tour TOTAL, 24, Cours Michelet F-92800 Puteaux (FR)**

(72) Inventeur : **Guidoni, Jean-Paul 60, rue de Fécamp F-75012 Paris (FR)**

(74) Mandataire : **Jolly, Jean-Pierre et al Cabinet Jolly 54, rue de Clichy F-75009 Paris (FR)**

(54) **Procédé pour le mélange à sec, sous forme homogène, de ciment et de fumées de silice.**

(57) L'invention concerne un procédé pour le mélange à sec de ciment et de fumées de silice, selon lequel on achemine séparément les fumées de silice et le ciment, à l'aide de flux distincts d'un gaz porteur, vers une enceinte dans laquelle le mélange des produits pulvérulents s'effectue de façon connue par la rencontre des deux flux gazeux.

Selon l'invention, le degré hygrométrique du gaz porteur assurant le convoyage des fumées de silice et celui du gaz présent dans l'enceinte de mélange est maintenu entre 0,4 et 0,85 et, de préférence, entre 0,5 et 0,8.

EP 0 500 402 A1

La présente invention concerne un procédé pour le mélange à sec, sous forme homogène, de ciment et de fumées de silice. Elle concerne plus particulièrement la réalisation, par mélange à sec, d'une composition comprenant entre 55% et 75 % en poids de ciment et 25% et 45% en poids de fumées de silice, ainsi que l'utilisation de cette composition pour la réalisation de coulis de ciment convenant pour la cimentation du puits de production d'hydrocarbures.

Au sens de la présente invention, on entend par fumées de silice des microparticules récupérées dans les fumées émises par les fours électriques de fabrication du silicium et de ses alliages, notamment les ferrosiliciums, et dont la teneur en silice est de l'ordre de 85 à 98% en poids. Ces particules ont une dimension maximum comprise entre 0,01 micron et 1 micron, avec une taille moyenne de quelques dixièmes de microns, et une surface spécifique comprise entre 15 et 25 m²/g, certaines de ces particules pouvant être soudées entre elles pour former de petits amas. La densité apparente des fumées de silice, densifiées ou non, utilisables dans le cadre de la présente invention est comprise entre 0,1 et 0,7.

L'utilisation de ces fumées de silice, conjointement avec une polyamine, notamment une polyéthylène imine, du ciment, de l'eau et les additifs usuels des ciments, a été proposée pour la réalisation de coulis de ciment particulièrement bien adaptés à la cimentation des puits de production d'hydrocarbures.

C'est ainsi que US-A-4 482 381 décrit l'utilisation comme réducteur de filtrat d'une telle composition de ciment, comprenant un polyéthylène imine ayant une masse moléculaire de 60 000, pour la cimentation de puits forés dans des terrains poreux, à une température inférieure à 38°C (100°F), ou même à une température supérieure, à condition d'utiliser alors des polymères sulfonés.

Par ailleurs, dans WO-A-90/09357, la Demanderesse et la Société dite : les Ciments d'Origny ont proposé d'utiliser un coulis allégé de ciment étanche aux gaz, du type général rappelé ci-dessus, mais contenant un polyéthylène imine ayant une masse moléculaire comprise entre 600 000 et 1 000 000, pour la cimentation, à des températures pouvant atteindre 130°C, de puits de production d'hydrocarbures.

L'incorporation des fumées de silice dans ces coulis de ciment est toutefois relativement complexe, car, comme décrit dans les deux publications mentionnées ci-dessus, elle s'effectue habituellement par voie humide. En effet, il est particulièrement difficile de réaliser à sec des mélanges homogènes de ciment et de fumées de silice, du fait de la différence des densités apparentes des deux matériaux : la densité apparente du ciment est de l'ordre de 1,5, soit plus du double de la valeur maximum de la densité apparente des fumées de silice (0,7 pour les fumées densifiées) et environ 15 fois plus que leur densité minimum (0,1 pour les fumées non densifiées). Les avantages liés à l'utilisation dans des ciments de fumées de silice, en particulier une excellente résistance à la compression, est toutefois liée à leur très fine granulométrie et il est donc souhaitable de pouvoir utiliser des fumées de silice aussi fines et donc aussi légères que possible, de préférence sous forme non densifiée, pour éviter des problèmes de redispersion dans le coulis de ciment.

La présente invention vise à remédier à cet inconvénient de la technique connue en proposant un procédé pour le mélange à sec, sous forme homogène, de ciment et de fumées de silice.

L'invention a également pour but de proposer un tel procédé qui conduise à un mélange homogène de ciment et de fumées de silice, utilisable comme un ciment pour la réalisation du coulis de ciment, notamment de coulis de ciment destinés à la cimentation des puits de production d'hydrocarbures.

La Demanderesse a établi, en effet, que pour obtenir une dispersion satisfaisante des fumées de silice au sein du ciment, il est nécessaire d'éviter l'apparition sur les particules de silice d'électricité statique responsable de leur agglomération et, dans ce but, de les convoyer et de les mélanger avec le ciment en présence d'un gaz, de l'air habituellement, dont la teneur en humidité soit suffisante pour annuler les effets de l'électricité statique.

L'invention a, par conséquent, pour objet un procédé pour le mélange à sec de ciment et de fumées de silice, selon lequel on achemine séparément les fumées de silice et le ciment, à l'aide de flux distincts d'un gaz porteur, vers une enceinte dans laquelle le mélange des produits pulvérulents s'effectue de façon connue par la rencontre des deux flux gazeux, ce procédé étant caractérisé en ce que le degré hygrométrique du gaz porteur assurant le convoyage des fumées de silice et celui du gaz présent dans l'enceinte de mélange est maintenu entre 0,4 et 0,85 et, de préférence, entre 0,5 et 0,8.

La Demanderesse a établi que, dans ces conditions, il est possible d'obtenir un mélange homogène de la fumée de silice et du ciment, moyennant un réglage approprié des débits relatifs des gaz porteurs, des fumées de silice et du ciment, à la portée de l'opérateur de telles installations de mélangeage de produits pulvérulents.

Naturellement, l'hygrométrie de l'air servant à véhiculer les fumées de silice, compactées ou non, densifiées ou non, devra être contrôlée de manière à éviter une altération de la qualité du ciment du fait d'un excès de l'humidité.

La température à laquelle le procédé conforme à l'invention est mis en oeuvre n'a pas d'influence sur la qualité d'homogénéité du mélange obtenu.

Les compositions préparées par ce procédé comprendront en général entre 55 et 75 % de ciment et entre 25 et 45 % de fumées de silice.

L'utilisation de telles compositions de ciment, pour la réalisation de coulis de ciment destinés à la cimentation de puits de production d'hydrocarbures, constitue un autre objet de l'invention.

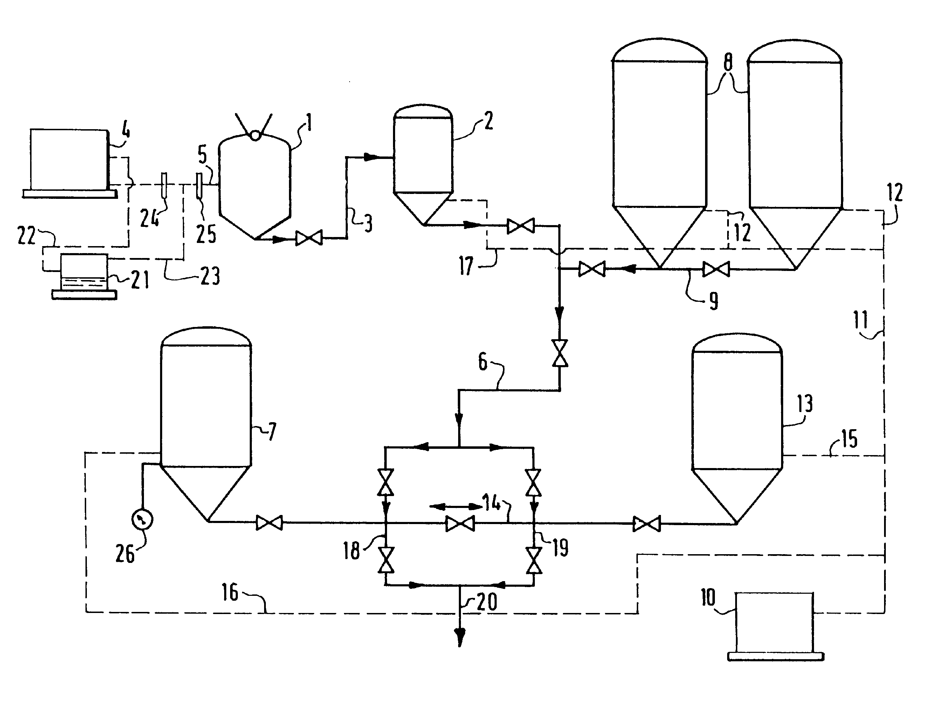

Les installations de mélangeage utilisables dans la mise en oeuvre du présent procédé sont des installations usuelles, utilisées pour mélanger des produits pulvérulents, telles que celle représentée sur la figure unique du dessin annexé, qui est un schéma d'une telle installation.

Cette installation comprend une bouteille 1 de chargement de fumées de silice, dans laquelle les sacs ou conteneurs de ces fumées sont déchargés, les fumées étant ensuite transférées pneumatiquement jusqu'à un silo 2 par la ligne 3, à l'aide d'un compresseur d'air 4, équipé d'un système de séchage et connecté à la bouteille de chargement 1 par une ligne 5.

Le silo 2 pour fumées de silice est lui-même relié par une ligne 6 à un silo de mélange 7. Deux silos 8 de stockage de ciment sont reliés par une ligne 9 à la ligne 6 et le ciment est transféré par voie pneumatique vers le silo de mélange 7 au moyen d'un compresseur à air 10, muni d'un système de séchage d'air et connecté aux silos 8 par une ligne 11, à laquelle les silos 8 sont raccordés par des branches 12.

Un silo d'homogénéisation 13 est connecté au silo de mélange 7 par une ligne 14 et est lui-même connecté par un branchement 15 à la ligne 11. Celle-ci est également raccordée par une ligne 16 au silo de mélange 7, et par une ligne 17 au silo 2 pour fumées de silice.

Le mélange de ciment et de fumées de silice peut être évacué soit du silo 7 de mélange, soit du silo 13 d'homogénéisation, respectivement par des lignes 18 et 19 se raccordant en 20.

En dérivation sur la ligne 5 réunissant le compresseur 4 et la bouteille de chargement 1 est prévue un humidificateur d'air 21, relié au compresseur 4 par la ligne 22 et à la ligne 5 par une ligne 23.

Des sondes 24 et 25 disposées sur la ligne 5 permettent de mesurer la teneur en humidité de l'air provenant du compresseur respectivement avant et après humidification par l'humidificateur 21.

Des vannes sont prévues sur les différentes lignes pour permettre ou interrompre la circulation des différents flux.

Le courant d'air arrivant du compresseur 4 à la bouteille 1 doit avoir un dégré hygrométrique compris entre 0,5 et 0,8 et, si la valeur contrôlée par la sonde 24 est insuffisante, une partie de l'air passera par l'humidificateur et la teneur en humidité sera à nouveau contrôlée par la sonde 25. Si l'hygrométrie de l'atmosphère ambiante dépasse 0,8, le système de séchage de compresseur 4 sera utilisé pour abaisser la teneur en humidité.

On commence par remplir le silo 2 d'une quantité déterminée de fumées de silice, que l'on transfère ensuite vers le silo de mélange 2, en même temps qu'une quantité appropriée de ciment à partir d'un silo 8. La quantité de ciment transférée au silo de mélange 7 est ajustée aux proportions désirées, lorsque le silo 2 est vide, à l'aide d'un peson 26.

Quand le silo 7 contient la quantité désirée du mélange de ciment et de fumées de silice, le mélange est homogénéisé par des transferts pneumatiques successifs, par exemple au nombre de trois, du silo 7 au silo 13 et réciproquement, à l'aide de l'air comprimé provenant du compresseur 10. Le degré hygrométrique de cet air ne dépassera pas 0,2 et l'on utilisera à cet effet le système de séchage de compresseur 10.

Dans une forme de réalisation, le silo 2 aura, par exemple, un volume de 11,3 m³, tandis que les silos 8 auront un volume de 41,77 m³ et les silos 7 et 13 un volume de 23,22 m³. Le compresseur 4 pourra avoir un débit maximum de 12,3 m³/mn sous une pression de 2,5 bars (2,5 x 10⁵ pascals), tandis que le compresseur 10 aura un débit de 14m³/mn sous une pression de 2,5 bars (2,5 x 10⁵ pascals ).

Deux exemples de mise en oeuvre de l'invention avec une telle installation sont données ci-après.

## EXEMPLE 1

On utilise une fumée de silice d'une densité apparente de 0,3 g/cm³, ayant la composition suivante, en % en poids :

| | |
|---|---|
| $SiO_2$ | 92,54 |
| $Al_2O_3$ | 0,65 |
| $Fe_2O_3$ | 2,22 |
| CaO | 0,11 |
| MgO | 1,05 |
| $K_2O$ | 0,86 |
| $SO_3$ | 0,00 |
| $TiO_2$ | 0,01 |
| MnO | 0,23 |
| $Na_2O$ | 0,18 |
| $Cr_2O_3$ | 0,02 |

P₂O₅      0,04

Perte au feu    2,09

On désire effectuer un mélange à sec à 30% en poids de cette fumée de silice et d'un ciment de classe G, dont la surface spécifique est de 3260 cm²/g et dont la composition est la suivante, toujours en % en poids :

| | |
|---|---|
| SiO₂ | 22,01 |
| Al₂O₃ | 3,15 |
| Fe₂O₃ | 4,97 |
| CaO | 65,13 |
| MgO | 0,93 |
| K₂O | 0,34 |
| SO₃ | 2,15 |
| TiO₂ | 0,19 |
| MnO | 0,08 |
| Na2O | 0,12 |
| Cr₂O₃ | 0,01 |
| P₂O₅ | 0,08. |

On remplit le silo 2 avec 3 tonnes (10 m³) de fumées de silice, en utilisant de l'air ayant un degré hygrométrique compris entre 0,75 et 0,78.

On transfère la fumée de silice vers le silo 7 en même temps que 7 tonnes de ciment (46 m³), en utilisant de l'air ayant un degré hygrométrique compris entre 0,15 et 0,18.

On homogénéise le mélange en procédant à trois transferts successifs du silo 7 au silo 13 et réciproquement, en utilisant de l'air ayant un degré hygrométrique de 0,15.

On obtient un mélange d'une masse de 10 tonnes, parfaitement homogène, ayant la composition suivante, en % en poids :

| | |
|---|---|
| SiO₂ | 43,20 |
| Al₂O₃ | 2,38 |
| Fe₂O₃ | 4,15 |
| CaO | 46,44 |
| MgO | 0,95 |
| K₂O | 0,49 |
| SO₃ | 1,60 |
| TiO₂ | 0,12 |
| MnO | 0,13 |
| Na₂O | 0,14 |
| Cr₂O₃ | 0,01 |
| P₂O₅ | 0,07 |
| Perte au feu | 1,20 |

La durée totale de l'opération a été de 66 minutes.

## EXEMPLE 2

On désire cette fois effectuer un mélange à 40% en poids d'une fumée de silice ayant une densité apparente 0,487 et d'un ciment de classe G.

La fumée de silice a la composition suivante, en % en poids :

| | |
|---|---|
| SiO₂ | 89,92 |
| Al₂O₃ | 0,35 |
| Fe₂O₃ | 3,85 |
| CaO | 0,63 |
| MgO | 0,95 |
| K₂O | 0,86 |
| SO₃ | 0,01 |
| TiO₂ | 0,00 |
| MnO | 0,20 |
| Na₂O | 0,21 |
| Cr₂O₃ | 0,00 |
| P₂O₅ | 0,01 |
| Perte au feu | 3,00 |

La composition du ciment, en % en poids, est la suivante :

| | |
|---|---|
| $SiO_2$ | 22,20 |
| $Al_2O_3$ | 3,18 |
| $Fe_2O_3$ | 5,01 |
| CaO | 65,68 |
| MgO | 0,94 |
| $K_2O$ | 0,34 |
| $SO_3$ | 2,17 |
| $TiO_2$ | 0,19 |
| MnO | 0,08 |
| $Na_2O$ | 0,12 |
| $Cr_2O_3$ | 0,01 |
| $P_2O_5$ | 0,08 |

On remplit le silo 2 avec 5 tonnes (10,26 m³) d'une fumée de silice, en utilisant de l'air ayant un dégré hygrométrique compris entre 0,68 et 0,77.

On transfère cette fumée de silice vers le silo 7 en même temps que 7,5 tonnes de ciment (4,98 m³) avec de l'air ayant un degré hygrométrique de 0,15.

Comme dans l'Exemple 1, on homogénéise ce mélange en procédant à trois transferts du mélange entre le silo 7 et le silo 13 et réciproquement, en utilisant de l'air ayant un degré hygrométrique de 0,15.

On obtient un mélange d'une masse de 12,5 tonnes, parfaitement homogène, ayant la composition suivante, en % en poids :

| | |
|---|---|
| $SiO_2$ | 49,65 |
| $Al_2O_3$ | 2,01 |
| $Fe_2O_3$ | 4,51 |
| CaO | 39,97 |
| MgO | 0,93 |
| $K_2O$ | 0,55 |
| $SO_3$ | 1,28 |
| $TiO_2$ | 0,11 |
| MnO | 0,13 |
| $Na_2O$ | 0,15 |
| $Cr_2O_3$ | 0,00 |
| $P_2O_5$ | 0,05 |
| L.0.1 | 1,71 |

La durée totale de l'opération a été de 75 minutes.

**Revendications**

**1-** Procédé pour le mélange à sec de ciment et de fumées de silice, selon lequel on achemine séparément les fumées de silice et le ciment, à l'aide de flux distincts d'un gaz porteur, vers une enceinte dans laquelle le mélange des produits pulvérulents s'effectue de façon connue par la rencontre des deux flux gazeux, ce procédé étant caractérisé en ce que le degré hygrométrique du gaz porteur assurant le convoyage des fumées de silice et celui du gaz présent dans l'enceinte de mélange est maintenu entre 0,4 et 0,85 et, de préférence, entre 0,5 et 0,8.

**2-** Procédé selon la revendication 1, caractérisé en ce que les débits de ciment et de fumées de silice sont tels que le mélange homogène résultant contienne entre 55 et 75 % de ciment et entre 25 et 45 % de fumées de silice.

**3-** Utilisation des mélanges de ciment et de fumées de silice obtenus par la mise en oeuvre du procédé selon l'une des revendications 1 et 2 pour la réalisation de coulis de ciment destinés à la cimentation de puits de production d'hydrocarbures.

Office européen
des brevets

# RAPPORT DE RECHERCHE EUROPEENNE

Numero de la demande

EP   92 40 0081

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 643 629 (SANDOZ S.A.)<br>* page 2, ligne 12 - ligne 32 *<br>* page 4, ligne 13 - ligne 23 *<br>--- | 1 | C04B28/02<br>C04B18/14<br>E21B33/13<br>B28C5/00 |
| P,A | GB-A-2 241 499 (SANDOZ LTD)<br>* revendications 1-3 *<br>--- | 1 | |
| A | FR-A-2 594 053 (HOCHTIEF AG)<br>* page 2, ligne 2 - page 3, ligne 34 *<br>--- | 1,2 | |
| A | WO-A-9 011 977 (DEN NORSKE STATS OLJESELSKAP A.S.)<br>* page 4, ligne 34 - page 5, ligne 24; revendications 1-3 *<br>--- | 1-3 | |
| A | GB-A-2 056 964 (ELKEM-SPIGERVERKET A/S)<br>* le document en entier *<br>--- | 1-3 | |
| A | DE-A-3 838 029 (NORSK HYDRO A/S)<br>* page 2, ligne 47 - ligne 60; revendications *<br>--- | 1-3 | |
| A | EP-A-0 307 066 (ELKEM A/S)<br>* colonne 2, ligne 40 - colonne 3, ligne 43 *<br>--- | 1,2 | DOMAINES TECHNIQUES RECHERCHES (Int. Cl.5) |
| A | ROADS AND ROAD CONSTRUCTION.<br>vol. 47, no. 563, Novembre 1969, SUTTON GB<br>pages 346 - 348; 'BASEMIX Pre-mixed Cement Bound P.F.A'<br><br>----- | | C04B<br>E21B<br>B28C |

Le présent rapport a été établi pour toutes les revendications

| Lieu de la recherche | Date d'achèvement de la recherche | Examinateur |
|---|---|---|
| LA HAYE | 15 MAI 1992 | THEODORIDOU E. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
..........................................................................................
& : membre de la même famille, document correspondant

EPO FORM 1503 03.82 (P0402)